# EUROPEAN PATENT APPLICATION

(11) **EP 1 312 458 A1**
(43) Date of publication of application: **21.05.2003**
(21) Application number: 01830709.0
(22) Date of filing: 16.11.2001
(51) Int. Cl.: B29C 47/02, B29C 47/06, B29C 47/50

(54) **Method and apparatus for the production of plastic extruded profiles**

(71) Applicant: Cucinella, Antonino, 75012 Bernalda (Matera) (IT); Gessi, Cristina, 75012 Bernalda (Matera) (IT)
(72) Inventor: Cucinella, Antonino, 75012 Bernalda (Matera) (IT); Gessi, Cristina, 75012 Bernalda (Matera) (IT)
(74) Representative: Celestino, Marco

(57) **Abstract**

A method and apparatus for the production of plastic extruded profiles, operating the extrusion of an intermediate profile (11) made of a first material through a first extrusion head (10), the passage of said intermediate profile (11) through at least least another extrusion head (12) having cross section larger than the intermediate profile (11); the addition of adding at least another material, obtaining a final profile (14) formed by said intermediate profile (11) coated by at least a layer of said at least another material. The first material may be is fed to the first extrusion head (10) by means of two cylinders in series (15,9), and respectively a first double-screw plasticizing cylinder (15) and a second single-screw cylinder (9). The method allows free choice of the raw material to make the intermediate (11) and the final profiles (14), free choice of the composition of the material that can be used for the production of the intermediate profile (11), double-screw cylinder (15) carries out an homogenisation thereof. Moreover, with respect to the technique of the co-extrusion, an accurate control of the geometry of the intermediate profile is possible.

## Description

### Field of the invention

The invention described below refers to a method for the production of plastic extruded profiles. The invention aims in particular to the continuous extrusion moulding of compact rods of stiff plastic material.

The invention relates furthermore to an apparatus that carries out this method.

### Description of the prior art

In industrial applications such as that of aluminium windows and doors with thermal bridge breakers, or that of the vehicles sealing elements production, as well as in many other fields, continuous compact profiles are required having a desired cross section.

The most advantageous way and sometimes the only way of making these elements is extrusion moulding.

Said profiles must have good mechanical characteristics, wear and temperature resistance, as well as precise size tolerances and also good exterior finishing, since some portions thereof are often visible.

Plastic compounds are known suitable to extrusion moulding of profiles having such characteristics. For example, materials suitable for such applications are polyamides, in particular polyamide 6.6.

To obtain the required mechanical, thermal and exterior characteristics, a low extrusion speed is mainly necessary, often less than two metres/minute. Therefore, to obtain high production rates, the need arises of providing many extrusion moulds, arranged in parallel with subsequent multiplication of the costs. The low speed is essential to obtain the correct tolerances, that are necessary for said applications.

Furthermore, a material that would be suitable for a good finishing surface may be not suitable to obtain the required mechanical and thermal characteristics, and vice versa. This reduces strongly the choice among the available materials. In particular, owing to this reduction, some natural limitations of the used materials are acceptable, as a compromise, even if separately more suitable materials exist that allow the achievement of the ideal performances, respectively of exterior finishing (roughness), size tolerance, matching with adjacent elements, as well as mechanical and thermal characteristics.

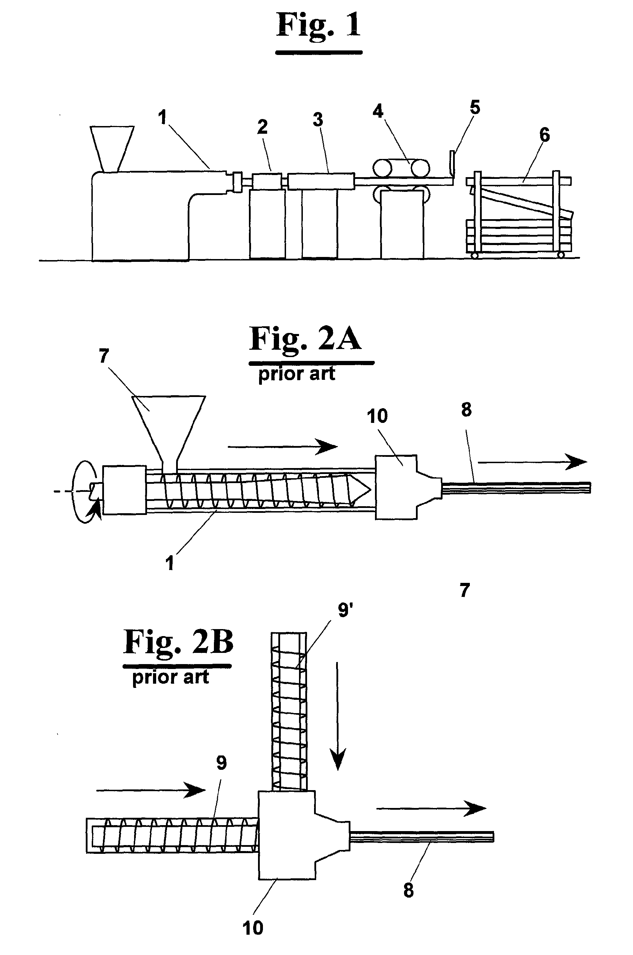

An extrusion moulding production line of known type is shown in figure 1 and has an extruder 1, a sizing die 2, a cooling basin 3, a drawing bench 4, a cutter 5 and a pallet for collecting the extruded profiles. From a head 10 of extruder 1 a profile 8 exits. Head 10 can have several outlets of different profiles in parallel. Extruder 1 can be like that shown in exemplifying figure 2A. It comprises a screw plasticizer. In the cylinder of extruder 1 a raw material not shown is inserted from a container 7. The raw material melts and plasticizes in the cylinder, heated by means not shown, and the screw pushes the molten material towards an extrusion head 10, from which a profile 8 continuously exits. For giving the profile a two- or multi-layered cross section co-extrusion is known, which provides the flow in a single extrusion head of different materials, which are guided towards the extrusion die as two or several layers. The main drawback is the control of the distribution of the materials of the layers.

An example of co-extrusion is shown diagrammatically in figure 2, where two cylinders 9 and 9' converge into an extrusion head 10, suitable to co-extrusion, obtaining a co-extruded profile 8 formed by a core made of the material fed by cylinder 9, and a surface layer obtained with the material fed by cylinder 9'.

A further drawback of co-extrusion is that the cross section of the material exiting from extrusion head 10 cannot be modified easily, because the respective exit flows of the two material would change. Therefore, variation of the cross section of the profile is much expensive.

### Summary of the invention

It is therefore object of the present invention to provide a method for the production of plastic extruded profiles, that achieves higher production rate than the prior art, without reducing mechanical and exterior qualities.

It is another object of the present invention to provide method for the production of plastic extruded profiles that allows to obtain:
- free choice of the raw materials to make the profile;
- in presence of multi-layer profiles, the possibility of quality control of the intermediate layers,
- control of the intermediate profile.

It is also an object of the present invention to provide an apparatus that carries out the above method, with the same advantages and easy construction, as well as flexibility in the change of the extrusion die, to obtain easily changes to the cross section of the profile.

These and other objects are achieved by the method for the production of plastic extruded profiles, comprising the steps of:
- extrusion of an intermediate profile by extruding a first material through a first extrusion head;
- passage of said intermediate profile through at least another extrusion head having cross section larger than the intermediate profile,
- adding at least another material, obtaining a final profile formed by said intermediate profile coated by at least a layer of said at least another material.

In a preferred embodiment of the invention, the first material is fed to the first extrusion head by means of two cylinders in series, and respectively a first double-screw plasticizing cylinder and a second single-screw cylinder. The double-screw cylinder mixes and plasticizes most favourably the first material, whereas the second single-screw cylinder suitably compacts the first material and pushes it towards the first extrusion head. This way, there is no need of a pumping system towards the first extrusion head. Another advantage of the first double-screw extruder is the free choice of the raw materials, so that materials may be chosen that are suitable to one another and are homogenised together.

The second material may have melting temperature lower than the first material.

According to another aspect of the invention, an apparatus for the production of plastic extruded profiles, comprises:
- a first extrusion head to make an intermediate profile by extruding a first material;
- at least another extrusion head having cross section larger than the intermediate profile through which said intermediate profile passes,
- means for adding at least another material to said at least another extrusion head, from which a final profile is thus formed by said intermediate profile coated by at least a layer of said at least another material.

The second extrusion head has advantageously extrusion dies with replaceable elements.

The apparatus has preferably two cylinders in series for feeding the first material to the first extrusion head, said cylinders comprising respectively a first double-screw plasticizing cylinder and a second single-screw compacting cylinder.

### Brief description of the drawings

Further characteristics of the method and of the apparatus according to the present invention, will be made clearer with the following description of an embodiment thereof, exemplifying but not limitative, with reference to the attached drawings, wherein:
- figure 3 shows a double-stage extrusion system according to the present invention;
- figure 4 shows the extrusion system of figure 3 wherein the feeding screw has a double-screw portion followed by a single-screw portion;
- figure 5 shows a cross section of an intermediate profile, whereas figures 6 and 7 show the intermediate profile of figure 5 coupled to a coating layer, having two different cross sections.

### Description of a preferred embodiment

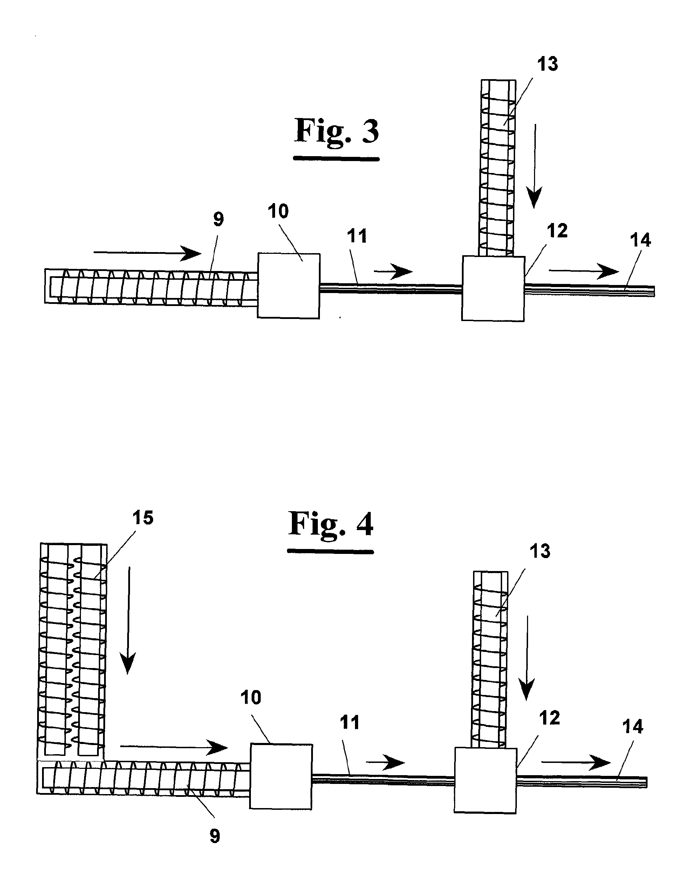

With reference to figure 3, the method for the production of plastic extruded profiles according to the invention provides a first extrusion step of a first material, pushed by a single-screw plasticizing cylinder 9 through a first extrusion head 10, obtaining an intermediate profile 11. This first step is completely similar to that described in figure 1 with the difference that a much higher speed can used, even double or more, than a normal single-stage extrusion.

Then, the intermediate profile passes through a second extrusion head 12 having an extrusion die larger than the intermediate profile 11 coming from the first extrusion head 10, and in which a second material is added, pushed by a second single-screw plasticizing cylinder 13. The cross section gap between the intermediate profile 11 and the extrusion die of the second extrusion head 12 corresponds to the thickness of the added material fed by second cylinder 13. The final profile 14 that exits from the second extrusion head 12 is then formed by the intermediate profile 11 coated by, or coupled to, a layer made of the second material fed by the second cylinder 13.

The main advantage of this solution, now described, is mainly a low production cost. In fact, for making intermediate profile 11, an extrusion process is possible at a higher speed than the extruders according to the prior art, obtaining a rough intermediate profile.

Through second extrusion by head 12, the extrusion speed is always the same as the feeding speed of intermediate profile 11. Therefore, since the thickness of the second material is substantially thin, there is a good result versus mechanical characteristics, surface quality and especially size tolerance.

The materials respectively used to obtain the intermediate profile and the additional layer are advantageously different, or where the polymer species are the same, they have different compositions, in order to give an appropriate mechanical resistance to the core of the profile, i.e. the intermediate profile, and to give to the surface layer the required hardness and exterior/geometric features, suitable for the final application.

The two materials used in the two steps should be preferably compatible to each other. If necessary, in any case, the two material can be compatible by interposing between the two phases described above, a third extrusion step of a suitable material. In this case, the same technique object of the present invention is used, i.e. providing an intermediate extrusion step.

The surface layer may also have functions of protection from the formation of condensed water, for example detrimental to polyamide, and/or the function of matching easily with adjacent elements, when it is used for windows and doors frames with thermal bridge breakers.

For some applications, such as for heat or acoustic insulation, rods can be advantageously made that have a core of foam material and a outer layer of stronger and more compact material.

The second material not necessarily coats all the intermediate profile. In fact, it could be sufficient a partial coating, on a predetermined portion of the cross section of the intermediate profile.

Concerning both the intermediate profile and the outer layer, a suitable material may be chosen among: polyamides, polyesters, polyolefins, polycarbonates, styrene polymers, vinyl polymers, acrylic polymers, fluorinated polymers, silicone polymers, acetalic resins, foam plastic polymers, elastomeric polymers, polyurethanic polymers, that can be reinforced and adjusted in the various composition formulas. Blends of said materials are also possible.

The composition formula of the second material has preferably a hardening temperature lower than the melting temperature of the first material, so that in the second extrusion head there is not a partial significant surface fusion of the intermediate profile.

As shown in figure 4, according to a preferred embodiment of the invention, the first material is fed to the first extrusion head 10 by means of two cylinders in series, and respectively a first double-screw plasticizing cylinder 15 and a second single-screw cylinder 9. The double-screw cylinder 15 mixes and plasticizes most favourably the first material, whereas second single-screw cylinder 9 suitably compacts the first material and pushes it compact towards the first extrusion head.

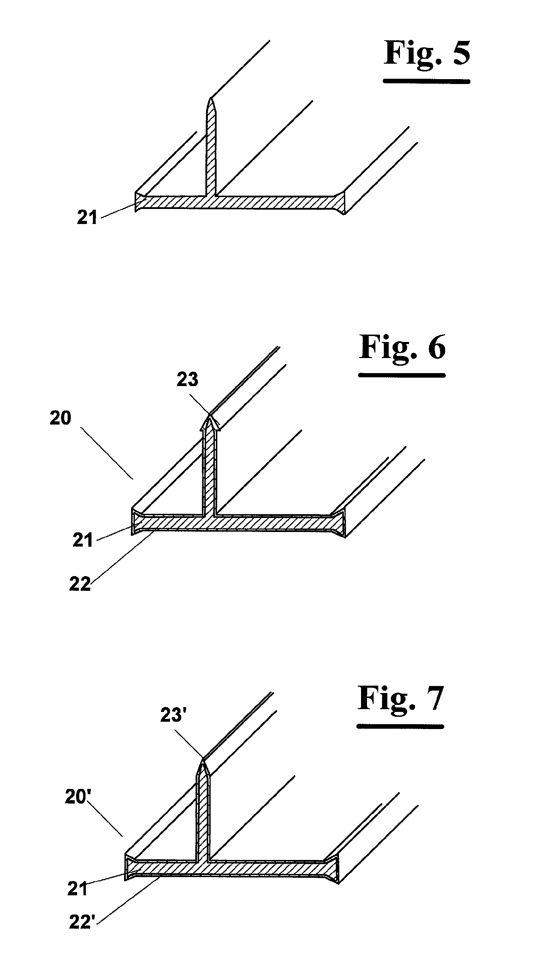

The shape of the final profile is determined by second extrusion head 12. Starting from a same intermediate profile 11, then, a series of different final profiles 14 may be obtained, simply changing the extrusion die of second extrusion head 12. In this case, the thickness of the material added onto intermediate profile 11 will be selectively different. For example, in figure 6 and 7 two profiles 20 and 20' are shown, obtained by the same intermediate profile 21, shown in figure 5, on which the layers 22 and 22' have been applied for making arrow-shaped end 23 and straight end 23' respectively. The change of the extrusion die in the second extrusion head 12 leaves unchanged the extrusion die on first extrusion head 10.

The method for the production of plastic extruded profiles allows then to obtain:
- free choice of the raw material to make the intermediate and the final profiles;
- free choice of the composition of the material that can be used for the production of the intermediate profile, whereby double-screw cylinder carries out an homogenisation thereof;
- with respect to the technique of the co-extrusion, an accurate control of the geometry of the intermediate profile is possible.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A method for the production of plastic extruded profiles, comprising the steps of:
- extrusion of an intermediate profile by extruding a first material through a first extrusion head;
- passage of said intermediate profile through at least another extrusion head having cross section larger than the intermediate profile,
- adding at least another material, obtaining a final profile formed by said intermediate profile coated by at least a layer of said at least another material.

2. Method for the production of plastic extruded profiles according to claim 1, wherein the first material is fed to the first extrusion head by means of two cylinders in series, and respectively a first double-screw plasticizing cylinder and a second single-screw cylinder.

3. Method for the production of plastic extruded profiles according to claim 2, wherein said double-screw cylinder mixture and plasticizes the first material, whereas second single-screw cylinder compacts the first material and pushes it towards the first extrusion head without the use of a pumping system.

4. Method for the production of plastic extruded profiles according to claim 1, wherein said second material has hardening temperature lower than the melting temperature of said first material.

5. An apparatus for the production of plastic extruded profiles, comprising:
- a first extrusion head to make an intermediate profile by extruding a first material;
- at least another extrusion head having cross section larger than the intermediate profile through which said intermediate profile passes,
- means for adding at least another material to said other extrusion head, from which a final profile is thus formed by said intermediate profile coated by at least a layer of said at least another material.

6. An apparatus for the production of plastic extruded profiles according to claim 5, wherein, said second extrusion head provides extrusion dies with replaceable elements.

7. An apparatus for the production of plastic extruded profiles according to claim 5, wherein, two cylinders in series are provided for feeding the first material to the first extrusion head, said cylinders being respectively a first double-screw plasticizing cylinder and a second single-screw compacting cylinder.
